# EUROPEAN PATENT SPECIFICATION

(11) **EP 3 944 391 B1**
(45) Date of publication and mention of the grant of the patent: **30.10.2024**
(21) Application number: 20795269.8
(22) Date of filing: 07.04.2020
(51) Int. Cl.: H01M 10/0567, H01M 4/38, H01M 4/48, H01M 4/525, H01M 4/587, H01M 10/0525, H01M 10/42, H01M 4/485

(54) **ELECTROLYTE SOLUTION, LITHIUM-ION BATTERY, AND DEVICE CONTAINING LITHIUM-ION BATTERY**
ELEKTROLYTLÖSUNG, LITHIUM-IONEN-BATTERIE UND LITHIUM-IONEN-BATTERIE ENTHALTENDE VORRICHTUNG
SOLUTION ÉLECTROLYTIQUE, BATTERIE AU LITHIUM-ION ET DISPOSITIF CONTENANT UNE BATTERIE AU LITHIUM-ION

(30) Priority: 26.04.2019 CN 201910345535
(43) Date of publication of application: 26.01.2022
(73) Proprietor: Contemporary Amperex Technology (Hong Kong) Limited, Central, Central And Western District (HK)
(72) Inventor: LIANG, Chengdu, Ningde, Fujian 352100 (CN); FU, Chenghua, Ningde, Fujian 352100 (CN); CHEN, Peipei, Ningde, Fujian 352100 (CN); JIANG, Bin, Ningde, Fujian 352100 (CN)
(74) Representative: Kraus & Lederer PartGmbB
(86) International application number: PCT/CN2020/083468
(87) International publication number: WO 2020/216052

(56) References cited:
- CN-A- 1 339 846
- CN-A- 107 146 911
- CN-A- 108 123 172
- CN-A- 108 511 800
- CN-A- 108 511 800
- CN-A- 110 867 612
- CN-A- 110 867 612
- JP-A- 2017 117 684
- JP-A- 2017 117 684

## Description

This application claims priority to Chinese Patent Application No. 201910345535.5, filed with the China National Intellectual Property Administration on April 26, 2019 and entitled "ELECTROLYTE AND LITHIUM-ION BATTERY".

### TECHNICAL FIELD

This application relates to the field of battery technologies, and in particular, to an electrolyte, a lithium-ion battery, and an apparatus containing such lithium-ion battery.

### BACKGROUND

Lithium-ion batteries are widely applied to electric vehicles and consumer electronic products due to their advantages such as high energy density, high output power, long cycle life, and low environmental pollution. For applications in electric vehicles, a lithium-ion battery serving as a power source is required to have characteristics such as low impedance, long cycle life, long storage life, and excellent safety performance. Lower impedance helps ensure good acceleration performance and kinetic performance. When being applied to hybrid electric vehicles, lithium-ion batteries can reclaim energy and raise fuel efficiency to a greater extent, and increase charging rates of the hybrid electric vehicles. Long storage life and long cycle life allow the lithium-ion batteries to have long-term reliability and maintain good performance in the normal life cycles of the hybrid electric vehicles.

Interaction between an electrolyte and positive and negative electrodes has a great impact on the performance of a lithium-ion battery. Therefore, to meet requirements of hybrid electric vehicles for power, it is necessary to provide an electrolyte and a lithium-ion battery with good comprehensive performance.
JP 2017 117684 A relates to an electrolytic solution for a nonaqueous electrolyte battery and a nonaqueous electrolyte battery using the electrolytic solution.
CN 108 511 800 A discloses an ultra-low temperature lithium ion battery electrolyte characterized by comprising a lithium salt, an organic solvent and a film forming additive.
CN 110867612 A discloses a low-temperature charging and discharging electrolyte of a lithium ion battery, which comprises a lithium salt, an organic solvent and an additive, wherein the lithium salt is a mixture of lithium hexafluorophosphate, lithium difluorobis (oxalate) phosphate and lithium difluorophosphate in a mass ratio of (80-90): (1-15): (1-15), and the additive is ethylene sulfate, sulfur dioxide and a sulfydryl-containing organic matter in a mass ratio of (82-85): (6-10): (6-10).

### SUMMARY

In view of the problems in the Background, the purpose of this application is to provide an electrolyte, a lithium-ion battery, and an apparatus containing such lithium-ion battery. The lithium-ion battery of this application has good high-temperature storage performance, good cycling performance, and excellent kinetic performance.

To achieve the foregoing purpose, a first aspect of this application provides an electrolyte, including a lithium salt, an organic solvent, and an additive. The additive includes a sulfur-containing compound and lithium difluorophosphate, and a reduction potential of the sulfur-containing compound is higher than a reduction potential of lithium difluorophosphate. The sulfur-containing compound is selected from one or more of sulfur hexafluoride, sulfuryl fluoride, sulfur dioxide, sulfur trioxide, carbon disulfide, dimethyl sulfide, and methyl ethyl sulfide, the mass of the sulfur-containing compound accounts for 0.1% to 5% of total mass of the electrolyte.

A second aspect of this application provides a lithium-ion battery, including a positive electrode plate, a negative electrode plate, a separator, and an electrolyte. The positive electrode plate includes a positive electrode current collector and a positive electrode membrane disposed on at least one surface of the positive electrode current collector and including a positive electrode active material, the negative electrode plate includes a negative electrode current collector and a negative electrode membrane disposed on at least one surface of the negative electrode current collector and including a negative electrode active material, and the electrolyte is the electrolyte described in the first aspect of this application.

A third aspect of this application provides an apparatus, including the lithium-ion battery in the second aspect of this application.

This application includes at least the following beneficial effects:

In this application, the sulfur-containing compound with a higher reduction potential than lithium difluorophosphate is used together with lithium difluorophosphate as an additive to the electrolyte. Because the reduction potential of the sulfur-containing compound is higher than the reduction potential of lithium difluorophosphate, the sulfur-containing compound can form a low-impedance SEI film on a surface of a negative electrode prior to lithium difluorophosphate, to reserve more lithium difluorophosphate on a surface of a positive electrode to form a passivation film with good thermostability, so that the lithium-ion battery has better high-temperature storage performance and cycling performance, without suffering performance deterioration such as lithium precipitation. In addition, interaction between molecules of the sulfur-containing compound is relatively weak, and therefore viscosity of the electrolyte can be effectively reduced after the sulfur-containing compound is dissolved in the electrolyte, thereby further improving kinetic performance of the lithium-ion battery. The apparatus of this application includes the lithium-ion battery provided in this application, and therefore has at least the same advantages as the lithium-ion battery.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic diagram of an embodiment of a lithium-ion battery.
FIG. 2 is an exploded view of FIG. 1.
FIG. 3 is a schematic diagram of an embodiment of a battery module.
FIG. 4 is a schematic diagram of an embodiment of a battery pack.
FIG. 5 is an exploded view of FIG. 4.
FIG. 6 is a schematic diagram of an embodiment of an apparatus using a lithium-ion battery as a power source.

### DESCRIPTION OF EMBODIMENTS

To make the objectives, technical solutions, and advantages of the embodiments of this application clearer, the following clearly and completely describes the technical solutions in the embodiments of this application. Apparently, the described embodiments are some but not all of the embodiments of this application.

The following describes in detail an electrolyte and a lithium-ion battery according to this application.

An electrolyte according to a first aspect of this application is described first.

The electrolyte according to the first aspect of this application includes a lithium salt, an organic solvent, and an additive. The additive includes a sulfur-containing compound and lithium difluorophosphate (LiPO₂F₂), and a reduction potential of the sulfur-containing compound is higher than a reduction potential of lithium difluorophosphate. The sulfur-containing compound is selected from one or more of sulfur hexafluoride, sulfuryl fluoride, sulfur dioxide, sulfur trioxide, carbon disulfide, dimethyl sulfide, and methyl ethyl sulfide, the mass of the sulfur-containing compound accounts for 0.1% to 5% of total mass of the electrolyte.

For a negative electrode of a lithium-ion battery, in a first charging and discharging process, the lithium salt and the organic solvent in the electrolyte undergo a reduction reaction on a surface of a negative electrode active material, and reaction products are deposited on a surface of the negative electrode to form a dense solid electrolyte interface (SEI) film. The SEI film is insoluble in organic solvents, can exist stably in the electrolyte, and can prevent organic solvent molecules from passing through, which can effectively prevent co-intercalation of the solvent molecules and avoid the damage to the negative electrode active material caused by the co-intercalation of the solvent molecules, thereby greatly improving cycling performance and service life of the lithium-ion battery.

For a positive electrode of the lithium-ion battery, due to the reaction of CO₂ in the air, a Li₂CO₃ film is usually covered on a surface of a lithium-containing positive electrode active material. Therefore, when the lithium-containing positive electrode active material comes into contact with the electrolyte, the electrolyte can undergo oxidation reaction on a surface of the positive electrode either in storage or in a charging and discharging cycle, and products of oxidation decomposition will be deposited on the surface of the positive electrode and replace the original Li₂CO₃ film to form a new passivation film. The formation of the new passivation film will not only increase an irreversible capacity of the positive electrode active material and reduce charge-discharge efficiency of the lithium-ion battery, but also hinder deintercalation and intercalation of lithium ions in the positive electrode active material to some extent, thereby reducing cycling performance and a discharge capacity of the lithium-ion battery.

Lithium difluorophosphate is an electrolyte additive with good thermostability and hydrolysis resistance. In a charging and discharging process of the lithium-ion battery, lithium difluorophosphate can form a passivation film on surfaces of both the positive electrode and the negative electrode. The passivation film formed on the surface of the positive electrode has an advantage of good thermostability, and therefore can effectively improve high-temperature storage performance of the lithium-ion battery. However, the passivation film formed on the negative electrode (also known as a solid electrolyte interface film, SEI film) may cause lithium precipitation on the surface of the negative electrode, which in turn deteriorates the cycling performance of the lithium-ion battery. In this application, the sulfur-containing compound with a higher reduction potential than lithium difluorophosphate is used together with lithium difluorophosphate as an additive to the electrolyte. Because the reduction potential of the sulfur-containing compound is higher than the reduction potential of lithium difluorophosphate, the sulfur-containing compound can form a low-impedance SEI film on a surface of a negative electrode prior to lithium difluorophosphate, reducing a probability of forming a film by lithium difluorophosphate on the surface of the negative electrode, and allowing more lithium difluorophosphate to form on a surface of a positive electrode a passivation film that has better thermostability and that facilitates Li⁺ deintercalation and intercalation, so that the lithium-ion battery has better high-temperature storage performance and cycling performance, without suffering performance deterioration such as lithium precipitation. In addition, interaction between molecules of the sulfur-containing compound is relatively weak, and therefore viscosity of the electrolyte can be effectively reduced after the sulfur-containing compound is dissolved in the electrolyte, helping further improve kinetic performance of the lithium-ion battery.

The electrolyte according to this application includes both lithium difluorophosphate and the sulfur-containing compound with a higher reduction potential than lithium difluorophosphate. The lithium-ion battery can have good high-temperature storage performance, good cycling performance, and excellent kinetic performance.

In the electrolyte according to the first aspect of this application, the sulfur-containing compound is selected from one or more of sulfur hexafluoride (SF₆), sulfuryl fluoride (SO₂F₂), sulfur dioxide (SO₂), sulfur trioxide (SO₃), carbon disulfide (CS₂), dimethyl sulfide (CH₂SCH₃), and methyl ethyl sulfide.

In the electrolyte according to the first aspect of this application, mass of the sulfur-containing compound is 0.1% to 5% of the total mass of the electrolyte, and preferably, 0.5% to 5% of the total mass of the electrolyte. If a percentage of the sulfur-containing compound is too low, it is difficult to form a complete SEI film on the surface of the negative electrode, so that it is difficult to reserve more lithium difluorophosphate on the surface of the positive electrode to form a passivation film. If the percentage of the sulfur-containing compound is too high, products resulting from oxidative decomposition of excessive sulfur-containing compound will accumulate on the surface of the positive electrode, which will increase the impedance of the passivation film formed on the surface of the positive electrode, thereby affecting other performances of the lithium-ion battery.

In the electrolyte according to the first aspect of this application, preferably, mass of lithium difluorophosphate is 0.1% to 5% of the total mass of the electrolyte, and more preferably, 0.1% to 3% of the total mass of the electrolyte. If a percentage of lithium difluorophosphate is too low, it is difficult to form a complete passivation film on the surface of the positive electrode, slightly weakening the improvement in the high-temperature storage performance and cycling performance of the lithium-ion battery. If the percentage of lithium difluorophosphate is too high, too much lithium difluorophosphate may accumulate on the surface of the negative electrode, putting the negative electrode of the lithium-ion battery at risk of lithium precipitation.

In the electrolyte according to the first aspect of this application, a type of the lithium salt is not particularly limited, and may be selected reasonably as appropriate to actual needs. Specifically, the lithium salt may be selected from one or more of LiN(CₓF₂ₓ₊₁SO₂)(C_{y}F_{2y+1}SO₂), LiPF₆, LiBF₄, LiBOB, LiAsF₆, Li(CF₃SO₂)₂N, LiCF₃SO₃, and LiClO₄, where x and y are natural numbers.

In the lithium-on battery according to the first aspect of this application, a type of the organic solvent is not particularly limited, and may be selected reasonably as appropriate to actual needs. Specifically, the organic solvent may be selected from one or more of propylene carbonate, ethylene carbonate, dimethyl carbonate, diethyl carbonate, dipropyl carbonate, ethyl methyl carbonate, methyl propyl carbonate, vinylene carbonate, fluorocarbon ethylene carbonate, methyl formate, ethyl acetate, ethyl propionate, propyl propionate, methyl butyrate, methyl acrylate, vinyl sulfite, propylene sulfite, dimethyl sulfite, diethyl sulfite, 1,3-propane sultone, vinyl sulfate, acid anhydride, N-methylpyrrolidone, N-methylformamide, N-methylacetamide, acetonitrile, N,N-dimethylformamide, sulfolane, dimethyl sulfoxide, dimethyl sulfide, γ-butyrolactone, and tetrahydrofuran.

Next, a lithium-ion battery according to a second aspect of this application is described.

The lithium-ion battery according to the second aspect of this application comprising a positive electrode plate, a negative electrode plate, a separator, and an electrolyte. The positive electrode plate comprising a positive electrode current collector and a positive electrode membrane disposed on at least one surface of the positive electrode current collector and including a positive electrode active material, and the negative electrode plate comprising a negative electrode current collector and a negative electrode membrane disposed on at least one surface of the negative electrode current collector and including a negative electrode active material. The electrolyte is the electrolyte according to the first aspect of this application.

In the lithium-ion battery according to the second aspect of this application, the positive electrode active material is selected from materials capable of deintercalating and intercalating lithium ions. Specifically, the positive electrode active material may be selected from one or more of a lithium cobalt oxide, a lithium nickel oxide, a lithium manganese oxide, a lithium nickel manganese oxide, a lithium nickel cobalt manganese oxide, a lithium nickel cobalt aluminum oxide, but this application is not limited to these materials.

In the lithium-ion battery according to the second aspect of this application, the negative electrode active material is selected from materials capable of intercalating and deintercalating lithium ions. Specifically, the negative electrode active material is selected from one or more of soft carbon, hard carbon, artificial graphite, natural graphite, a silicon-based material, a tin-based material, and lithium titanate, but this application is not limited to these materials.

In the lithium-on battery according to the second aspect of this application, a type of the separator is not particularly limited, and may be selected reasonably as appropriate to actual needs. For example, the separator may be a polyethylene film, a polypropylene film, a polyvinylidene fluoride film, or a multilayer composite film thereof, but is not limited thereto.

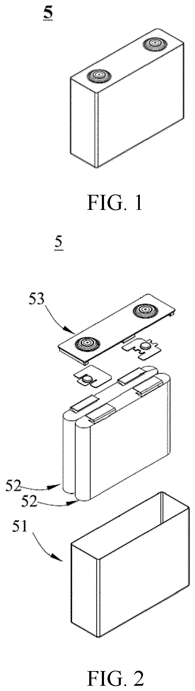

This application does not impose special limitations on a shape of the lithium-ion battery, and the lithium-ion battery may be of a cylindrical shape, a square shape, or any other shapes. FIG. 1 shows a lithium-ion battery 5 of a square structure as an example.

In some embodiments, the lithium-ion battery may include an outer package for encapsulating the positive electrode plate, the electrode plate, the separator, and the electrolyte.

In some embodiments, the outer package of the lithium-ion battery may be a soft package, for example, a soft bag. A material of the soft package may be plastic, for example, may include one or more of polypropylene PP, polybutylene terephthalate PBT, polybutylene succinate PBS, and the like. Alternatively, the outer package of the lithium-ion battery may be a hard shell, for example, a hard plastic shell, an aluminum shell, or a steel shell.

In some embodiments, referring to FIG. 2, the outer package may include a housing 51 and a cover plate 53. The housing 51 may include a bottom plate and side plates connected to the bottom plate, where the bottom plate and the side plates form an accommodating cavity through enclosure. The housing 51 has an opening communicating with the accommodating cavity, and the cover plate 53 can cover the opening to seal the accommodating cavity.

The positive electrode plate, the negative electrode plate, and the separator may experience a laminating or wounding process to form an electrode assembly 52. The electrode assembly 52 is packaged in the accommodating cavity. The electrolyte is infiltrated in the electrode assembly 52.

There may be one or more electrode assemblies 52 included in the lithium-ion battery 5, and their quantity may be adjusted as appropriate to actual needs.

In some embodiments, lithium-ion batteries may be assembled into a battery module, and the battery module may include a plurality of lithium-ion batteries. The specific quantity may be adjusted according to the use case and capacity of the battery module.

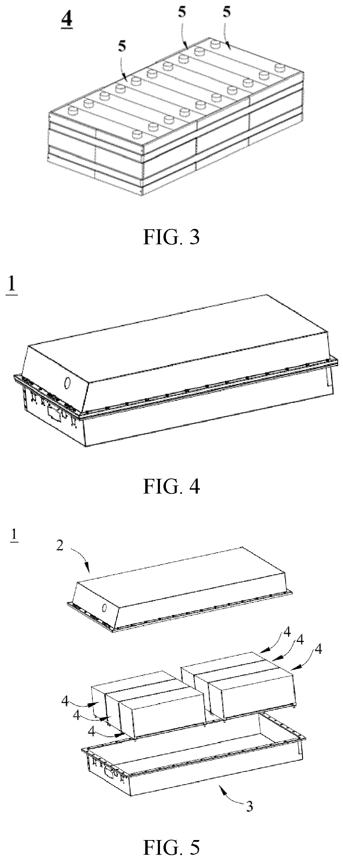

FIG. 3 shows a battery module 4 used as an example. Referring to FIG. 3, in the battery module 4, a plurality of lithium-ion batteries 5 may be sequentially arranged in a length direction of the battery module 4. Certainly, the lithium-ion batteries may alternatively be arranged in any other manner. Further, the plurality of lithium-ion batteries 5 may be fixed by using fasteners.

Optionally, the battery module 4 may further include a housing with an accommodating space, and the plurality of lithium-ion batteries 5 are accommodated in the accommodating space.

In some embodiments, battery modules may be further assembled into a battery pack, and a quantity of battery modules included in the battery pack may be adjusted according to the use case and capacity of the battery pack.

FIG. 4 and FIG. 5 show a battery pack 1 used as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form enclosed space for accommodating the battery modules 4. The plurality of battery modules 4 may be arranged in the battery box in any manner.

A third aspect of this application provides an apparatus, where the apparatus includes the lithium-ion battery according to the second aspect of this application. The lithium-ion battery may be used as a power source for the apparatus, or an energy storage unit of the apparatus. The apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

A lithium-ion battery, a battery module, or a battery pack may be selected for the apparatus according to requirements for using the apparatus.

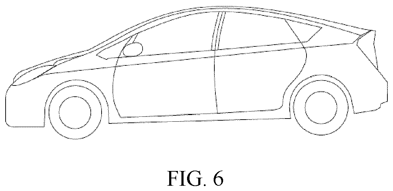

FIG. 6 shows an apparatus used as an example. The apparatus is a battery electric vehicle, a hybrid electric vehicle, a plug-in hybrid electric vehicle, or the like. To meet a requirement of the apparatus for high power and a high energy density of a battery, a battery pack or a battery module may be used.

In another example, the apparatus may be a mobile phone, a tablet computer, a notebook computer, or the like. The apparatus is generally required to be light and thin, and may use a sodium-ion battery as its power source.

This application is further described with reference to Examples. It should be understood that these examples are merely used to describe this application but not to limit the scope of this application.

All reagents used in Examples are commercially available or synthesized in a conventional manner, and can be used directly without further processing, and all instruments used in Examples are commercially available.

Lithium-ion batteries in Examples 1 to 20 and Comparative Examples 1 to 3 are prepared according to the following method.

### (1) Preparation of a positive electrode plate

A positive electrode active material LiNi_{0.5}Mn_{0.3}Co_{0.2}O₂, a conductive agent acetylene black, and a binder polyvinylidene fluoride (PVDF) were dissolved in a solvenet N-methylpyrrolidone (NMP) at a weight ratio of 94:3:3. The resulting mixture was thoroughly stirred to obtain a uniform positive electrode slurry. Then the positive electrode slurry was applied onto an aluminum (Al) foil positive electrode current collector, followed by drying, cold pressing, and cutting to obtain a positive electrode plate.

### (2) Preparation of a negative electrode plate

An active material artificial graphite, a conductive agent acetylene black, a binder styrene-butadiene rubber (SBR), and a thickener sodium carboxymethyl cellulose (CMC) were dissolved in deionized water at a weight ratio of 95:2:2:1. The resulting mixture was thoroughly stirred to obtain a uniform negative electrode slurry. Then the negative electrode slurry was applied onto a copper (Cu) foil negative electrode current collector, followed by drying, cold pressing, and cutting to obtain a negative electrode plate.

### (3) Preparation of an electrolyte

Ethylene carbonate (EC) and ethyl methyl carbonate (EMC) were mixed at a mass ratio of 30:70, a lithium salt LiPF₆ with a concentration of 1 mol/L was added into the resulting mixture, followed by adding a sulfur-containing compound and LiPO₂F₂. The mixture was stirred thoroughly to obtain a uniform electrolyte. The type and percentage of the sulfur-containing compound and the percentage of LiPO₂F₂ are shown in Table 1.

### (4) Preparation of a separator

A polyethylene (PE) porous polymer film was used as a separator.

### (5) Preparation of a lithium-ion battery

The positive electrode plate, the separator, and the negative electrode plate were stacked in sequence, so that the separator was sandwiched between the positive electrode plate and the negative electrode plate for isolation, and the resulting stack was wound to obtain an electrode assembly. The electrode assembly was placed in an outer package, the prepared electrolyte was injected, and then the outer package was sealed.

Next, a test procedure for the lithium-ion battery is as follows.

### (1) High-temperature storage performance test for the lithium-ion battery

At room temperature, the lithium-ion battery was charged to a voltage of over 4.3V at a constant current of 0.5C, and then charged to a current of below 0.05C at a constant voltage of 4.3V. The lithium-ion battery was kept in a 4.3V fully charged state, and then a thickness of the lithium-ion battery was measured and recorded as D0. Next, the lithium-ion battery in the 4.3V fully charged state was stored in an oven at 80°C for 7 days. After that, the lithium-ion battery was taken out, and a thickness of the lithium-ion battery at that point was measured and recorded as D1. Five lithium-ion batteries were measured per group, and average values were taken.

Thickness swelling rate of the lithium-ion battery after storage at 80°C for 7 days was: ε(%) = (D1-D0)/D0 × 100%.

### (2) Cycling performance test for the lithium-ion battery

At 25°C, the lithium-ion battery was charged with constant current and constant voltage at a charge current of 0.7C (that is, current at which the theoretical capacity was completely discharged in 2 hours) to an upper-limit voltage 4.3V; and then discharged with constant current and constant voltage at a discharge current of 0.5C to a final voltage of 3V. This was one charge-discharge cycle. Discharge capacity at that point was the discharge capacity at the 1^{st} cycle of the lithium-ion battery. The lithium-ion battery was tested according to the above method for 500 charge and discharge cycles, and the discharge capacity of the 500^{th} cycle was measured.

Capacity retention rate (%) of the lithium-ion battery after 500 cycles at 25°C = (discharge capacity of the 500^{th} cycle/discharge capacity of the 1^{st} cycle) × 100%.

### (3) Kinetic performance test for the lithium-ion battery

At 25°C, the lithium-ion battery was fully charged at 1C and fully discharged at 1C for 10 cycles, then the lithium-ion battery was fully charged at 1C, and then the negative electrode plate was removed and lithium precipitation on the surface of the negative electrode plate was observed. When the area of a lithium precipitation zone on the surface of the negative electrode was less than 5%, it was considered to be slight lithium precipitation; when the area of a lithium precipitation zone on the surface of the negative electrode ranged from 5% to 40%, it was considered to be moderate lithium precipitation; and when the area of a lithium precipitation zone on the surface of the negative electrode was greater than 40%, it was considered to be severe lithium precipitation.

**Table 1 Parameters and test results of Examples 1 to 20 and Comparative Examples 1 to 3**

| | Type of sulfur-containing compound | Percentage of sulfur-containing compound | Percentage of lithium difluorophosphate | Thickness swelling rate after storage at 80°C for 7 days (ε%) | Capacity retention rate after 500 cycles at 25°C (%) | Status of lithium precipitation |
|---|---|---|---|---|---|---|
| Example 1* | Sulfur dioxide | 0.05% | 1.00% | 24% | 70% | Slight lithium precipitation |
| Example 2 | Sulfur dioxide | 0.10% | 1.00% | 20% | 73% | Slight lithium precipitation |
| Example 3 | Sulfur dioxide | 0.50% | 1.00% | 17% | 80% | Slight lithium precipitation |
| Example 4 | Sulfur dioxide | 1.00% | 1.00% | 15% | 85% | Slight lithium precipitation |
| Example 5 | Sulfur dioxide | 2.00% | 1.00% | 12% | 86% | Slight lithium precipitation |
| Example 6 | Sulfur dioxide | 3.00% | 1.00% | 10% | 87% | Slight lithium precipitation |
| Example 7 | Sulfur dioxide | 5.00% | 1.00% | 8% | 80% | Moderate lithium precipitation |
| Example 8* | Sulfur dioxide | 8.00% | 1.00% | 6% | 77% | Moderate lithium precipitation |
| Example 9* | Sulfur dioxide | 10.00% | 1.00% | 4% | 72% | Moderate lithium precipitation |
| Example 10 | Sulfur dioxide | 3.00% | 0.05% | 38% | 69% | Slight lithium precipitation |
| Example 11 | Sulfur dioxide | 3.00% | 0.10% | 26% | 75% | Slight lithium precipitation |
| Example 12 | Sulfur dioxide | 3.00% | 0.50% | 15% | 83% | Slight lithium precipitation |
| Example 13 | Sulfur dioxide | 3.00% | 2.00% | 8% | 88% | Slight lithium precipitation |
| Example 14 | Sulfur dioxide | 3.00% | 3.00% | 6% | 85% | Moderate lithium precipitation |
| Example 15 | Sulfur dioxide | 3.00% | 5.00% | 5% | 80% | Moderate lithium precipitation |
| Example 16 | Sulfur dioxide | 3.00% | 6.00% | 2% | 70% | Moderate lithium precipitation |
| Example 17 | Sulfuryl fluoride | 3.00% | 1.00% | 13% | 86% | Slight lithium precipitation |
| Example 18 | Sulfur hexafluoride | 3.00% | 1.00% | 12% | 85% | Slight lithium precipitation |
| Example 19 | Carbon disulfide | 3.00% | 1.00% | 14% | 87% | Slight lithium precipitation |
| Example 20 | Sulfur trioxide:sulfur dioxide=1:1 | 3.00% | 1.00% | 12% | 86% | Slight lithium precipitation |
| Comparative Example 1 | / | / | / | 50% | 45% | Slight lithium precipitation |
| Comparative Example 2 | Sulfur dioxide | 3.00% | / | 42% | 63% | Moderate lithium precipitation |
| Comparative Example 3 | / | / | 1.00% | 26% | 66% | Slight lithium precipitation |

| | | | | | | |
|---|---|---|---|---|---|---|
| * Reference-Example | | | | | | |

It can be learned from analysis of the test results in Table 1 that, compared with Comparative Examples 1 to 3, in Examples 1 to 20, both the sulfur-containing compound and LiPO₂F₂ were added in the electrolyte, and the lithium-ion batteries could have not only good high-temperature storage performance, but also good storage performance and good kinetic performance. In Comparative Example 1, neither a gaseous sulfur-containing compound nor LiPO₂F₂ was added, and the high-temperature storage performance and cycling performance of the lithium-ion battery were both poor. In Comparative Example 2, only SO₂ was added, and in Comparative Example 3, only LiPO₂F₂ was added. Although the high-temperature storage performance and the cycling performance of the lithium-ion batteries could be improved, the degree of improvement was still not enough to make the lithium-ion batteries meet the actual use requirements.

It can be seen from analysis of the test results in Examples 1 to 9 that the percentage of SO₂ in Example 1 was too low, and the passivation film formed by SO₂ on the surface of the positive electrode and the SEI film formed on the surface of the negative electrode were inadequate to prevent further reaction between the electrolyte and the positive and negative electrode active materials. Therefore, although the high-temperature storage performance and the cycling performance of the lithium-ion batteries could be improved, improvement effects were not obvious. The percentages of SO₂ and LiPO₂F₂ in Examples 2 to 6 were moderate. The lithium-ion batteries had both good high-temperature storage performance and good cycling performance, and only slight lithium precipitation occurred on the surface of the negative electrode under the condition of 1C fast charging, meaning that the lithium-ion batteries also had good kinetic performance. In Examples 7 and 8, the percentage of SO₂ was slightly higher, the high-temperature storage performance of the lithium-ion batteries could be further improved, but this would affect the improvement of the cycling performance and the kinetic performance of the lithium-ion batteries. The percentage of SO₂ in Example 9 was too high. Although the high-temperature storage performance of the lithium-ion battery could be significantly improved, too much SO₂ would increase film-forming impedance of the positive electrode and the negative electrode, thereby causing lithium precipitation on the surface of the negative electrode under the 1C fast charging condition, and hindering the improvement of the cycling performance of the lithium-ion battery.

It can be seen from analysis of the test results in Example 6 and Examples 10 to 16 that, the percentage of LiPO₂F₂ in Example 10 was too low to form a complete passivation film on the surface of the positive electrode, and consequently, further contact between the electrolyte and the positive electrode active material could not be prevented. This was not conducive to improving the high-temperature storage performance of the lithium-ion batteries. The percentages of SO₂ and LiPO₂F₂ in Example 6 and Examples 11 to 13 were moderate. The lithium-ion batteries had good high-temperature storage performance, cycling performance, and kinetic performance. In Examples 14 and 15, the percentage of LiPO₂F₂ was slightly higher, and the improvement of the kinetic performance and the cycling performance of the lithium-ion batteries was affected. The percentage of LiPO₂F₂ in Example 16 was too high. Although the high-temperature storage performance of the lithium-ion batteries could be significantly improved, too much LiPO₂F₂ would accumulate on the surface of the positive electrode and the negative electrode, and the improvement of the cycling performance and the kinetic performance of the lithium-ion batteries was affected.

## Claims

1. An electrolyte, comprising:
a lithium salt;
an organic solvent; and
an additive;
wherein
the additive comprises a sulfur-containing compound and lithium difluorophosphate; and
a reduction potential of the sulfur-containing compound is higher than a reduction potential of lithium difluorophosphate,
wherein the sulfur-containing compound is selected from one or more of sulfur hexafluoride, sulfuryl fluoride, sulfur dioxide, sulfur trioxide, carbon disulfide, dimethyl sulfide, and methyl ethyl sulfide,
wherein the mass of the sulfur-containing compound accounts for 0.1% to 5% of total mass of the electrolyte.

2. The electrolyte according to claim 1, wherein the mass of the sulfur-containing compound accounts for 0.5% to 5% of the total mass of the electrolyte.

3. The electrolyte according to any one of claims 1 to 2, wherein the mass of lithium difluorophosphate accounts for 0.1% to 5% of the total mass of the electrolyte.

4. The electrolyte according to claim 3, wherein the mass of lithium difluorophosphate accounts for 0.1% to 3% of the total mass of the electrolyte.

5. A lithium-ion battery (5), comprising:
a positive electrode plate, comprising a positive electrode current collector and a positive electrode membrane disposed on at least one surface of the positive electrode current collector and comprising a positive electrode active material;
a negative electrode plate, comprising a negative electrode current collector and a negative electrode membrane disposed on at least one surface of the negative electrode current collector and that comprising a negative electrode active material;
a separator; and
an electrolyte;
wherein
the electrolyte is the electrolyte according to any one of claims 1 to 4.

6. The lithium-ion battery (5) according to claim 5, wherein the positive electrode active material is selected from one or more of a lithium nickel cobalt manganese oxide, a lithium nickel cobalt aluminum oxide.

7. The lithium-ion battery (5) according to claim 5 or 6, wherein the negative electrode active material is selected from one or more of soft carbon, hard carbon, artificial graphite, natural graphite, a silicon-based material, a tin-based material, and lithium titanate.

8. An apparatus, wherein the apparatus comprises the lithium-ion battery (5) according to any one of claims 5 to 7.

## Patentansprüche

1. Elektrolyt, umfassend:
ein Lithiumsalz;
ein organisches Lösungsmittel; und
einen Zusatzstoff;
wobei
der Zusatzstoff eine schwefelhaltige Verbindung und Lithiumdifluorophosphat umfasst; und
ein Reduktionspotential der schwefelhaltigen Verbindung höher ist als ein Reduktionspotential von Lithiumdifluorophosphat,
wobei die schwefelhaltige Verbindung ausgewählt ist aus einem oder mehreren von Schwefelhexafluorid, Sulfurylfluorid, Schwefeldioxid, Schwefeltrioxid, Kohlenstoffdisulfid, Dimethylsulfid und Methylethylsulfid,
wobei die Masse der schwefelhaltigen Verbindung 0,1% bis 5% der Gesamtmasse des Elektrolyten ausmacht.

2. Elektrolyt nach Anspruch 1, wobei die Masse der schwefelhaltigen Verbindung 0,5 bis 5% der Gesamtmasse des Elektrolyten ausmacht.

3. Elektrolyt nach einem der Ansprüche 1 bis 2, wobei die Masse des Lithiumdifluorophosphats 0,1% bis 5% der Gesamtmasse des Elektrolyten ausmacht.

4. Elektrolyt nach Anspruch 3, wobei die Masse des Lithiumdifluorphosphats 0,1% bis 3% der Gesamtmasse des Elektrolyts ausmacht.

5. Lithium-Ionen-Batterie (5), umfassend:
eine positive Elektrodenplatte, die einen positiven Elektrodenstromkollektor und eine positive Elektrodenmembran umfasst, die auf mindestens einer Oberfläche des positiven Elektrodenstromkollektors angeordnet ist und ein aktives Material für die positive Elektrode umfasst;
eine negative Elektrodenplatte, die einen negativen Elektrodenstromkollektor und eine negative Elektrodenmembran umfasst, die auf mindestens einer Oberfläche des negativen Elektrodenstromkollektors angeordnet ist und ein aktives Material für die negative Elektrode umfasst;
einen Separator; und
einen Elektrolyten;
wobei
der Elektrolyt der Elektrolyt nach einem der Ansprüche 1 bis 4 ist.

6. Lithium-Ionen-Batterie (5) nach Anspruch 5, wobei das aktive Material für die positive Elektrode ausgewählt ist aus einem oder mehreren von Lithium-Nickel-Kobalt-Mangan-Oxid, Lithium-Nickel-Kobalt-Aluminium-Oxid.

7. Lithium-Ionen-Batterie (5) nach Anspruch 5 oder 6, wobei das aktive Material für die negative Elektrode ausgewählt ist aus einem oder mehreren von weichem Kohlenstoff, hartem Kohlenstoff, künstlichem Graphit, natürlichem Graphit, einem Material auf Siliziumbasis, einem Material auf Zinnbasis und Lithiumtitanat.

8. Vorrichtung, wobei die Vorrichtung die Lithium-Ionen-Batterie (5) nach einem der Ansprüche 5 bis 7 umfasst.

## Revendications

1. Électrolyte comprenant :
un sel de lithium ;
un solvant organique ; et
un additif ;
dans lequel
l'additif comprend un composé contenant du soufre et du difluorophosphate de lithium ; et
le potentiel de réduction du composé contenant du soufre est supérieur au potentiel de réduction du difluorophosphate de lithium,
dans lequel le composé contenant du soufre est choisi parmi un ou plusieurs des composés suivants : hexafluorure de soufre, fluorure de sulfuryle, dioxyde de soufre, trioxyde de soufre, disulfure de carbone, sulfure de diméthyle et sulfure de méthyle et d'éthyle,
dans lequel la masse du composé contenant du soufre représente de 0,1 % à 5 % de la masse totale de l'électrolyte.

2. Électrolyte selon la revendication 1, dans lequel la masse du composé contenant du soufre représente de 0,5 % à 5 % de la masse totale de l'électrolyte.

3. Électrolyte selon l'une quelconque des revendications 1 à 2, dans lequel la masse de difluorophosphate de lithium représente de 0,1 % à 5 % de la masse totale de l'électrolyte.

4. Électrolyte selon la revendication 3, dans lequel la masse de difluorophosphate de lithium représente de 0,1 % à 3% de la masse totale de l'électrolyte.

5. Batterie lithium-ion (5), comprenant :
une plaque d'électrode positive, comprenant un collecteur de courant d'électrode positive et une membrane d'électrode positive disposée sur au moins une surface du collecteur de courant d'électrode positive et comprenant un matériau actif d'électrode positive ;
une plaque d'électrode négative, comprenant un collecteur de courant d'électrode négative et une membrane d'électrode négative disposée sur au moins une surface du collecteur de courant d'électrode négative et comprenant un matériau actif d'électrode négative ;
un séparateur ; et
un électrolyte ;
dans lequel
l'électrolyte est l'électrolyte selon l'une quelconque des revendications 1 à 4.

6. Batterie lithium-ion (5) selon la revendication 5, dans laquelle le matériau actif de l'électrode positive est choisi parmi un ou plusieurs oxydes de lithium nickel cobalt manganèse, un oxyde de lithium nickel cobalt aluminium.

7. Batterie lithium-ion (5) selon la revendication 5 ou 6, dans laquelle le matériau actif de l'électrode négative est choisi parmi un ou plusieurs des matériaux suivants : carbone mou, carbone dur, graphite artificiel, graphite naturel, matériau à base de silicium, matériau à base d'étain et titanate de lithium.

8. Appareil, dans lequel l'appareil comprend la batterie lithium-ion (5) selon l'une quelconque des revendications 5 à 7.
